# EUROPEAN PATENT APPLICATION

(11) **EP 4 596 448 A1**
(43) Date of publication of application: **06.08.2025**
(21) Application number: 23793949.1
(22) Date of filing: 15.09.2023
(51) Int. Cl.: B65D 75/38, A47J 31/36, B65D 75/42, B65D 85/804

(54) **SUPPLY SUPPORT WITH A PLURALITY OF INDIVIDUAL PORTIONS FOR PREPARING BEVERAGES AND PROCESS OF PRODUCTION THEREOF**

(30) Priority: 28.09.2022 PT 2022118226
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT); DE FIGUEIREDO BRANCO, João André, 1885-091 MOSCAVIDE (PT)
(74) Representative: Patentree
(86) International application number: PCT/PT2023/050029
(87) International publication number: WO 2024/072245

(57) **Abstract**

The present invention refers to a supply support (1) configured with a band shape and comprising a plurality of collection portions (13) presenting collection confinements (130) that confine individual portions (2) to be used in a beverage preparation machine (100), such as for example in a espresso type coffee machine. The supply support (1) according to the invention is characterized in that present a simple and efficient construction, com material properties and dimensional aspects adapted so that the supply support (1) can be produced with less costs, can be more efficiently arranged inside a cartridge (3) and can be operated more efficiently and reliably by a traction device (101) of a beverage preparation machine (100).

The present invention further refers to a process for producing a supply support (1).

## Description

### Field of the invention

The present invention refers to a flexible support of elongated shape adapted for hermetically collecting and supplying a plurality of individual portions of edible substance for preparing beverages.

The present invention further refers to a process of production of supply support.

### Background of the invention

The prior art includes solutions relating to a flexible and elongated support comprising a plurality of individual portions, in particular portions of roast and ground coffee, to be successively processed in the extraction device of a beverage preparation machine, including a machine for preparing espresso type coffee, tea or similar.

The documents US 598,639, US 3,607,297, US 3,812,273, WO 97/17006, DE 10248137 A1 disclose supports of individual portions of the type of the present invention.

US 3,607,397 discloses a method for producing a support whereby the regions of collection of edible substance are provided by means of stamping of a bottom support sheet, so as to conform regions of cylindrical format. The top and bottom support sheets are united in hermetic manner by means of thermal welding or adhesive material connection.

Moreover, the prior art includes document WO 2013/169134 A2 filed by the author of the present invention that discloses an advantageous configuration of beverage preparation system adapted for using such a support of a plurality of portions.

Supports of a plurality of portions of this type give rise to several technical construction issues in view of the efficiency of production and operation thereof.

In the case of a relatively high number of individual portions, including more than 10 individual portions, there are issues relating to the possibility of a more efficient and reliable displacement of a bigger length and total of support to be pulled, as well as ease of storage inside of a package of collection of the supply support, for example in a disposition of zigzag type extending along the height.

In this context, it is known from EP 1541070 B1, to provide these supports with a plurality of holes in lateral edges that can engage with corresponding pins of a traction device. However, this solution presents at least two types of constrains: said lateral edges tend to occupy a relatively substantial space and there is the risk of tearing up specially in the narrower zones, thereby interrupting the drive by pull thereof, in particular in the case of certain construction materials and especially when wet, even if only slightly.

Document EP 0457708 A1 also discloses a beverage preparation system including a collecting package for a flexible and elongated strip that serves as support of individual portions of the type of the present invention. In particular, this document discloses arranging the strip in zigzag along the upwards vertical direction inside of the package and with the individual portions disposed in unaligned manner, whereby the strip is pulled from a top region of the package and in a generally upwards supply direction to the pulling device of the beverage preparation machine.

Documents WO 2016/048181 A1 and WO 2016/048182 A1 have also been filed by the author of the present invention and disclose solutions for the movement of the support of individual portions of the type of the present invention, from the collection package thereof up to a extraction device downstream.

Documents WO 2016/013034 A1 and WO 2016/130035 A1 have also been filed the author of the present invention, and disclose advantageous configurations of collection packages for supports of individual portions of the type of the present invention.

The documents WO 2021/118376 A1 and WO 2021/118377 A1 have also been filed the author of the present invention, and address several of these aspects.

The expert in the field is thus confronted with the problem of how to configure certain quantities of individual portions, in general presenting between 5 and 7 grams each, and respective supply support so as to enable the efficient and effective supply thereof by a traction device of the beverage preparation machine, in particular a better connection and traction thereof, so as to mitigate risks of jamming or disconnection of the support starting from a zigzag vertical storage arrangement inside of a package for collection of the support. Moreover, several dimensional and construction aspects of the supply support are also relevant for a bigger storage capacity. This problem can, therefore, include a relatively high number of combinations of several aspects including dimensional relations, material properties of the supply support and other. In this sense, the author has carried out several tests so as to determine which combinations of dimensional aspects and material properties can provide the best operational results.

### General description of the invention

The objective of the present invention is to provide a supply support of a plurality of individual portions of edible substance for preparing a respective beverage by means of extraction, said support comprising support sheets united to each other in juxtaposition along a connection plane and forming collection confinements provided so as to hermetically close said individual portions inside the collection confinements, whereby the supply support provides lower production costs and better structural resistance, in particular of the region of the collection confinements, and operation reliability.

The aforementioned objective is solved according to the present invention by means of a supply support according to claim 1.

In particular, the aforementioned objective is solved by means of a supply support that presents connection regions that provide material connection and extend around the collection confinements, and do not extend until the region of the lateral edges of the supply support.
it is preferred when the connection regions are the only regions providing connection between the two support sheets and between edge regions of the supply support, so that require less connecting substance and provide better structural reinforcement of the collection confinements in combination with the shape thereof.

The supply support comprises an alignment of successive collection portions presenting a respective collection confinement for collection of an individual portion of edible substance.

It is preferred when the supply support comprises two support sheets provided in a gas-tight material, and united in juxtaposition so that the collection confinements can collect a respective individual portion of edible substance in gas-tight manner.

It is preferred when the supply support presents at least 50 individual portions, preferentially at least 60 individual portions.

Moreover, the supply support is configured in a material with a resistance to traction of at least 2 kg, so that provides a reliable and efficient displacement by traction means, in particular so that enables a more efficient actuation by a traction device acting upon a downstream edge of the supply support.

The present invention further refers to a process for producing a supply support, in particular of a supply support according to any of claims 1 to 13.

The process according to the present invention is defined according to claim 14.

### Description of the Figures

The present invention shall be hereinafter explained in greater detail based upon preferred embodiments and the attached Figures. The Figures show, in simplified schematic representations:
- Figure 1:: top and bottom views of an individual portion according to the prior art;
- Figure 2:: side cut view of a collection portion according to the prior art;
- Figure 3:: lateral and top view of a supply support according to the invention;
- Figure 4:: lateral view of operative parts of a beverage preparation system including a supply support (1) according to the invention;
- Figure 5:: side cut view of a first embodiment of a supply support (1) according to the invention;
- Figure 6:: top view of a second embodiment of a supply support (1) according to the invention;
- Figure 7:: side cut view of a third embodiment of a supply support (1) according to the invention;
- Figure 8:: side cut view of a fourth embodiment of a supply support (1) according to the invention;
- Figure 9:: top view of a fifth embodiment of a supply support (1) according to the invention;
- Figure 10:: top view of a sixth embodiment of a supply support (1) according to the invention;
- Figure 11:: top view of a seventh embodiment of a supply support (1) according to the invention;
- Figure 12:: top view of an eight embodiment of a supply support (1) according to the invention;
- Figure 13:: side cut view of several parts of a supply support (1) according to the invention.

### Detailed description of the invention

The supply support (1) according to the invention is configured so that can collect a plurality of individual portions (2), preferentially in the form of compacted tablets of roast and ground coffee beans.

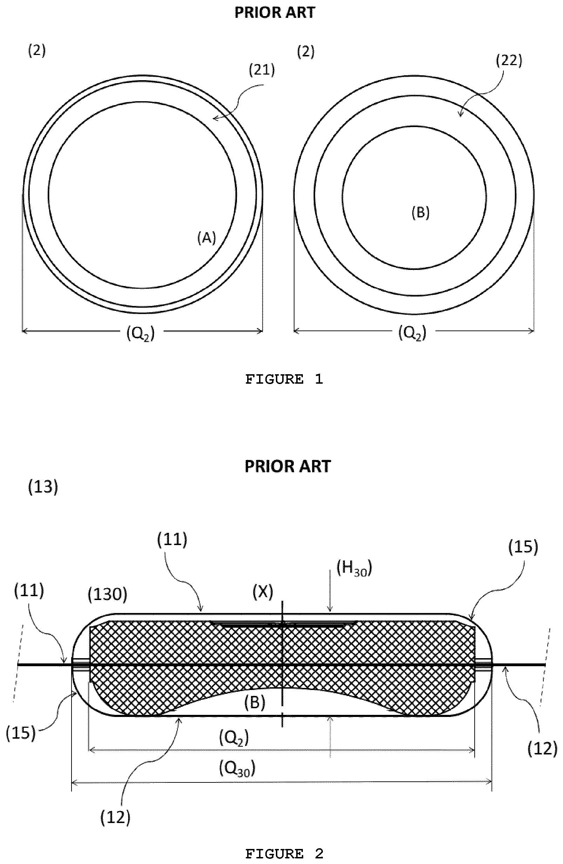

**Figure 1** schematically represents an individual portion (2) of edible substance according to the prior art and of the type of the present invention.

The individual portions (2) are provided in the form of compacted tablets of roast and ground coffee beans, preferentially a quantity comprised between 5 and 8 g, particularly preferentially between 5,5 and 6,5 g.

The individual portions (2) can present at least one of, preferentially at least most part of, of the following parameters:
- a volumetric density of at least 0,8 g/cm³;
- a hardness of less than 30 N;
- a humidity of at least 3%, preferentially between 3 and 6% in weight;
- a distribution of characteristic average bean dimension of up to 1,5 mm, preferentially up to 1,0 mm, particularly preferentially of up to 0,7 mm.

The individual portions (2) can present a general shape of disc or cylindric type, of circular transversal section with a characteristic transversal dimension of portion (Q₂), rotationally symmetric relative to a central axis (X). The top and bottom surfaces (21, 22), oriented upstream and downstream can present respective cavities (A, B) also of circular transversal section and concentric relative to the central axis (X).

The downstream cavity (B) can present a general shape of a spherical dome type and extend centred and along a most part of the characteristic transversal dimension (Q₂) of the individual portion (2).

It has been demonstrated as particularly advantageous in terms of extraction efficacy, when the individual portion (2) presents a ratio between the portion characteristic dimension (Q₂) and the portion height (H₂) comprised between 2.5 and 4.5, preferentially between 3.0 and 4.0, whereby the height (H₂) is preferentially comprised between 5 and 25 mm, preferentially between 7 and 15 mm.

As represented in the **Figures 2****,** **3** and **4****,** a support (1) according to the prior art presents multiple collection portions (13) disposed successively along a longitudinal direction of the support (1), for a successive use thereof, preferentially separated from the remaining supply support (1) in an extraction device (102) of a beverage preparation machine (100). The supply support (1) is configured so that can be collected in a cartridge (3) that can be operatively associated, preferentially pulled out from the cartridge casing (31) through an exit opening (32) and conducted to the extraction device (102) by a traction disposition that includes a first traction device (101).

As represented in **Figure** 2, the collection portions (13) comprise collection confinements (130) adapted for collection of the individual portions (2).

The support sheets (11, 12) can present cavities of symmetric and equal shape, so that the support sheets (11, 12) united to each other in juxtaposition along a connection plane (Y) provide the collection confinements (130).

The individual portions (2) are collected so that extend on both sides of the connection plane (Y) of the support sheets (11, 12) with a total collection height (H₃₀).

The collection confinement (130) can present a characteristic collection dimension (Q₃₀) in the connection plane (Y) and can present lateral walls (15) of curved shape that extend between an upstream-oriented wall and a downstream-oriented wall, that extends along planes transversal to the direction of a central axis (X), preferentially a central symmetry axis, and/or of the prevailing direction of the pressurised extraction flow.

The supply (1) support can be provided so that the collection confinements (130) present top and base walls of at least approximately equal shape and dimension and of planar format extending parallel to the connection plane. Said top and base walls are configured for flow entry and exit, whereby the ratio between the area of the collection confinements (130) delimited in the connection plane (Y) and the projection of the area of top and bottom walls on the connection plane (Y) is comprised between 1.20:1 and 1.40:1, preferentially between 1.25:1 and 1.35:1, so that the top and base walls of the collection confinements (130) are supported by the greater structural resistance provided by the curved configuration of the lateral wall (15) and relative distance thereto.

Considering an advantageous format of the individual portion (2), the volume of the collection confinements (130) is configured different from, preferentially at least 5% bigger than the volume of the individual portion (2), and is preferentially further configured so that, in case the collection confinement (130) is not impinged by pressurised flow, the collection confinement (130) presents a minority interior surface fraction of contact regions with the individual portions (2).

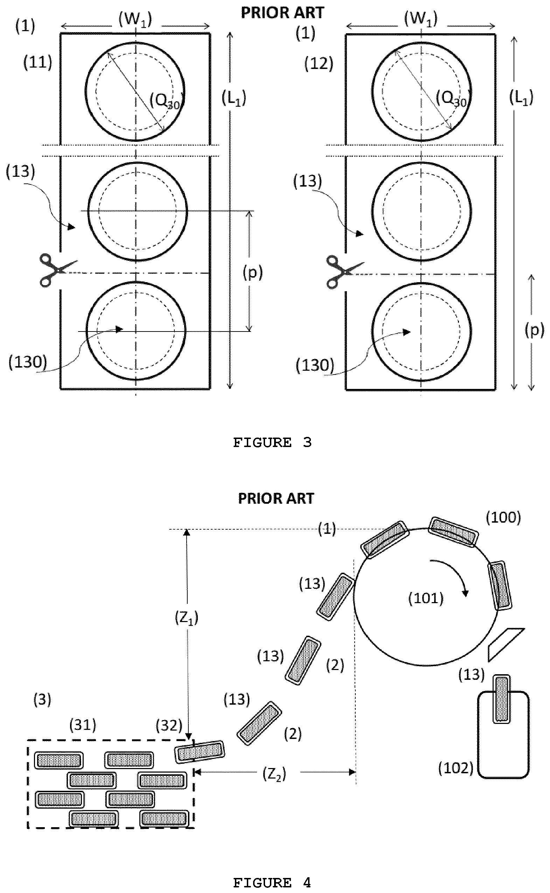

**Figure 3** represents a supply support (1) that includes two support sheets (11, 12) of elongated rectangular format and provided in a flexible material, presenting a width (W1) and a length (L1), and united to each other in juxtaposition along a connection plane (Y) so that a first support sheet (11) provides a top surface and wall, or upstream-oriented side, and a second support sheet (12) provides a base surface and wall, or downstream-oriented side (12).

Each support sheet (11, 12) can be formed by a single piece, in particular of sheet type or similar, that extends along the entire supply support (1).

As previously mentioned, the collection confinements (130) are conformed in the support sheets (11, 12) so that present reciprocally complementary hemispherical shapes and with symmetrical shape relative to the connection plane (Y) when seen in transversal cut view. The material of the support sheets (11, 12) is provided so that is plastically deformable, retaining the shape imprinted thereon.

The collection confinements (130) are provided uniformly distanced from each other by a step extension (p) and so that can confine individual portions (2) in gas-sealed manner. As the reader understands, the step extension (p) also corresponds to the extension of each collection portion (13).

As schematically represented in **Figure 4****,** the supply support (1) is configured in form of flexible strip so that can be collected in a zigzag disposition inside a cartridge (3). The cartridge (3) is adapted so that can be operatively associated with a beverage preparation machine (100), for example in a position where the path of the supply support (1) at least approximately extends in the same vertical plane of central axis of the traction (101) and extraction device (102) of the machine (100). The cartridge (3) presents a cartridge casing (31) with an exit opening (32) arranged on a corner region.

In case the cartridge (3) is in operative position, the supply support (1) can be engaged and pulled by the traction device (101) so as to supply the collection portions (13) to a respective extraction device (102). The collection portion (13) furthest downstream can be separated from the remaining supply support (1) and individually supplied to the extraction device (102) where the individual portions (2) are impinged by a pressurised flow along a prevailing flow direction, so that the beverage is obtained downstream of the extraction device (102).

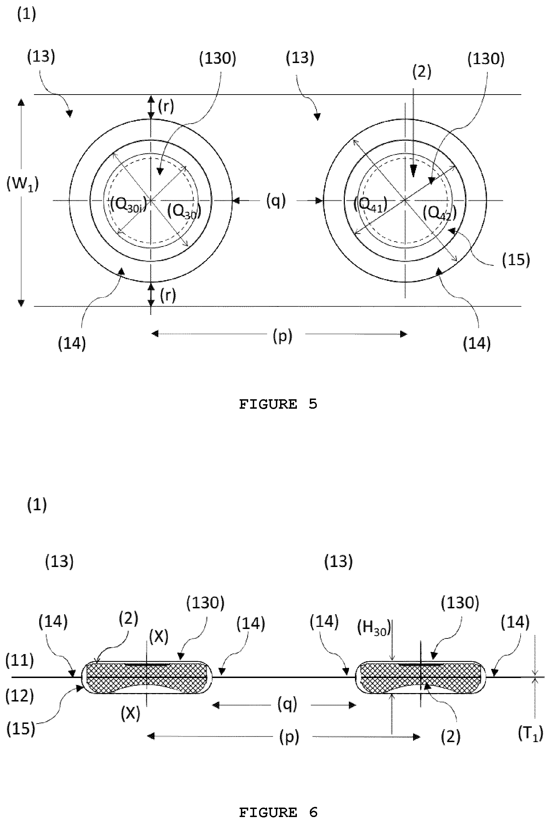

As represented in **Figures 5** and **6****,** a supply support (1) according to the present invention presents a step extension (p) that is at least twice bigger than the characteristic dimension of collection (Q₃₀), and the free extension (q) between successive collection confinements (130).

The collection confinements (130) do not confine a filter material, and preferentially only confine the individual portions (12).

Moreover, in a supply support (1) according to the present invention, the support sheets (11, 12) are united to each other by connection regions (14) that present a connection surface that extends radially on the connection plane (Y) from the perimeter of the collection confinements (130) in an extension smaller than the extension of the support sheets (11, 12) occupied by the collection confinements (130).

The connection regions (14) are adapted so that provide material connection between the support sheets (11, 12) and greater resistance to flection and/or greater rigidity, at least in the most part, preferentially in the entire surface of their extension.

Is is advantageous when the connection regions (14) are adapted so that present a greater resistance to flexion and/or greater rigidity, preferentially at least 10% bigger, preferentially at least 15% bigger, than other regions of the support sheets (11, 12). According to this aspect, the connection regions (14) provide preferential flexion regions on each side of a collection confinement (130) along the longitudinal direction of the supply support (1). This aspect is advantageous because reduces risks of flexion in the region of the collection confinements (130), with risk of rupture of the individual portion (2), when the supply support (1) is handled or operatively pulled by a machine (100). Moreover, this aspect further contributes to a better engagement of the collection portions (13) with corresponding engagement means in the traction (101) and extraction device (102) of the machine (100).

It is advantageous when the support sheets (11, 12) are united by connection regions (14) with a characteristic connection dimension (Q₄) that is smaller than the width (W₁) of the supply support (1), whereby the support sheets (11, 12) are united to each other so that provide gas sealing of the collection confinements (130) only through the connection regions (14) and preferentially also through regions with form of strip that extend transversally between the lateral edges, in the two edge regions of the length (L₁) of the supply support (1).

It is advantageous when the connection regions (14) extend from and around at least most part of the perimeter region of each collection confinement (130), preferentially of the totality of said perimeter region.

According to a particularly advantageous aspect, the ratio between the area of the collection confinements (130) in the connection plane (Y) and the area of the connection surface of the connection regions (14) is comprised between 1.5:1 and 5.0:1, preferentially between 2.0:1 and 3.0:1, so that the connection region (14) presents a sufficient extension of material connection surface in relation to the characteristic dimension of the collection confinements (130).

Still in this case, it is preferred when the connection regions (14) present a characteristic connection dimension (Q₄) comprised between 70% and 80%, preferentially between 73% and 77% of the width (W₁) of supply support (1).

The free lateral edges (r) of the supply support (1) are preferentially devoid of connection regions between support sheets (11, 12).

It is herewith provided a reliable connection with less costs than in the case of a connection that includes union of the support sheets (11, 12) along the free lateral edges.

Moreover, it is preferred when the connection regions (14) present a general shape of annular type with non-linear width, symmetric and centred relative to the collection confinements (130).

It is further preferred when the connection regions (14) present a format that corresponds to at least one of:
- a format including at least two portions in opposite sides of the collection confinements (130) and not extending along the entire extension of the step extension (p) between successive collection portions (13);
- a format of annular type extending around the collection confinements (130) and with an exterior dimension smaller than the width (W1) of the support sheets (11, 12);
- a free distance (q) between consecutive connection regions (14) bigger than the extension of the lateral margins (r).

The support sheets (11, 12) can be united by connection regions (14) presenting at least one of:
- an area of connection surface smaller than 60%, preferentially smaller than 50% the area delimited by the collection confinement (130) in the connection plane (Y);
- an area of connection surface smaller than 40%, de preferentially smaller than 30% of the area of the collection portions (13) in the connection plane (Y).

The connection regions (14) present at least one of:
- a ratio between interior connection dimension (Q₄ᵢ) and the transversal collection dimension (Q₃₀) of the collection confinement (130) comprised between 1.00:1 and 1.05:1, preferentially between 1.01:1 and 1.03:1,
- a ratio between exterior connection dimension (Q₄ₑ) and interior connection dimension (Q₄ᵢ) comprised between 1.10:1 and 1.50:1, preferentially between 1.20:1 and 1.40:1,

The ratio between the transversal dimension (W₁) of the support sheets (11, 12) and the exterior connection dimension (Q₄ᵢ) is preferentially comprised between 1.05:1 and 1.30:1, preferentially between 1.10:1 and 1.20:1.

The supply support (1) presents a step extension (p) that is at least 0,85 times, preferentially at least 0,95 times the support width (W₁), whereby the step (extension p) is preferentially comprised between 70 and 90 mm, preferentially between 75 and 88 mm.

The supply support (1) presents collection confinements (130) with at least one of the following dimensions:
- a transversal characteristic collection dimension (Q₃₀) of the collection confinements (130) in the connection plane (Y) comprised between 30 and 45 mm, preferentially between 35 and 40 mm;
- a total height (H₃₀) of the collection confinements (130) comprised between 5 mm and 13 mm, preferentially between 7 mm and 11 mm.

The supply support (1) further presents collection confinements (130) with at least one of the following dimensions:
- a support width (W₁) comprised between 55 and 75 mm, preferentially between 60 and 70 mm;
- a dimension of each lateral edge (r) comprised between 4 and 10 mm, preferentially between 6 and 9 mm.

According to an advantageous aspect, the supply support (1) presents a ratio between characteristic collection dimension (Q₃₀) and height (H₃₀) of the collection confinements (130) comprised between 3.0:1 and 6.0:1, preferentially between 3.5:1 and 5.0:1, whereby the characteristic collection dimension (Q₃₀) is comprised between 30 and 45 mm, preferentially between 35 and 40 mm.

According to a particularly preferred aspect, the supply support (1) presents a ratio between characteristic connection dimension (Q₄) and projection on the connection plane (Y) of the dimension (Q₃₀ᵢ) between lateral walls (15) of the collection confinements (130) comprised between 1.5:1 and 2.5.:1, preferentially between 1.7:1 and 2.2:1, whereby the collection walls (15) present a curvature with a radius comprised between 3 and 7 mm, preferentially between 4 and 6 mm along at least the most part of its extension.

Each one of the aspects above contributes to a better ease of movement, in particular by means of traction, of the supply support (1) and of structural resistance of the collection confinements (130). In particular, provide connection regions (14) in material connection with lateral walls (15) of curved shape, preferentially of a circumference segment with a radius comprised between 3 and 6 mm, preferentially between 3,5 and 5,5 mm, along at least most part of its extension, leads to a greater structural resistance of the connection regions (14), reducing the risks of deflection of the collection portion (13) in the connection regions (14).

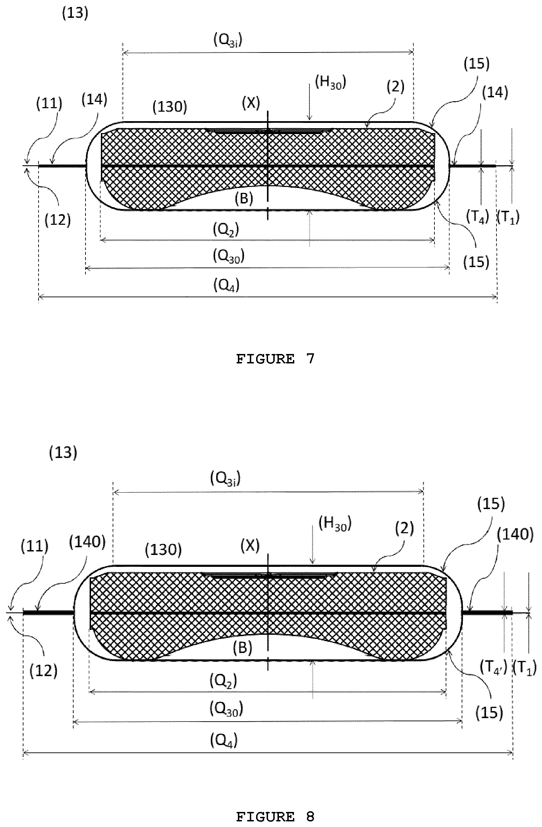

In the case represented in **Figure 7****,** the connection regions (14) present an annular shape that extends all around and from the perimeter of the collection confinements (130), symmetric and disposed in concentric manner relative to the central axis of the collection confinements (130).

The connection regions (14) do not extend until the regions of the free lateral edges (r) and advantageously constitute the only regions of connection between the support sheets (11, 12) and between the two edge regions of the supply support (1).

The connection regions (14) are advantageously provided by means of material connection, including of the type material fusion and/or adhesion of materials, between the two support sheets (11, 12) in the entire surface extension of the connection regions (14), so that there is provided gas-sealing inside the collection confinements (130).

In the case of a first embodiment, the material connection can be obtained by means of thermal welding of the support sheets (11, 12) including by fusion of a material component thereof. This could be the case of support sheets (11, 12) including a metallic material in their composition.

It is preferred when the support sheets (11, 12) are provided in a material adapted so that provides gas-sealed material connection between support sheets (11, 12) when submitted to a temperature above 60 °C.

In the case of a second embodiment, the material connection can be obtained by juxtaposition of adhesive portions of the support sheets (11, 12) corresponding to the connection regions. This could be the case of support sheets (11, 12) including a biodegradable material in their composition.

The support sheets (11, 12) are advantageously provided in a material of band or strip type with a thickness comprised between 0,02 and 0,3 mm, preferentially between 0,08 and 0,15 mm.

In these cases, and as represented in **Figure 7****,** the thickness (T₄) of the connection regions (14) can be equal or bigger, but not vary by more than 5% relative to the total thickness (T₁) of the support sheets (11, 12) directly united in juxtaposition.

In the case of another embodiment represented in **Figure 8****,** the connection regions (14) include a connection element (140) of planar format arranged between the support sheets (11, 12), and adapted so that provides at least one of: bigger resistance to flexion and bigger rigidity than the support sheets (11, 12) united in juxtaposition in the connection region (14).

The connection element (140) can be provided in an adhesive material with adhesive properties relative to the material of the support sheets (11, 12).

The connection element (140) is provided in a different material and with a thickness bigger than the sum of the individual thicknesses of the support sheets (11, 12).

The connection element (140) preferentially presenting at least one of: the shape and the planar dimension corresponding to at least the most part of the shape and dimension of the connection region (14). In the case represented, the connection element (140) has the shape and dimension of the connection region (14).

The connection element can present a thickness configured so that the thickness (T_{4'}) of the connection regions (14) is at least 5%, preferentially at least 10% bigger than the thickness (T₁) of the support sheets (11, 12) directly united in juxtaposition. It is preferred when the connection element (140) presents a thickness comprised between 0,5 and 5 mm, preferentially between 1 and 3 mm.

In the case that the connection region (14) includes a connection element (140) it is preferred when the thickness (T₄) of the connection regions (14) is bigger by a value comprised between 50% and 500%, preferentially between 100% and 400%, than the thickness (T₁) of the support sheets (11, 12) directly juxtaposed.

It has been established in experimental tests that the connection element (140) can be advantageously provided in a material with a resistance to flexion of at least 10%, preferentially at least 20% than the resistance to flexion of the support sheets (11, 12) directly united in juxtaposition.

The connection element (140) can present at least one of: a top and bottom surface with a surface finishing different from the surface finishing of the support sheets (11, 12), whereby it is preferred when at least one of the top and bottom surfaces of the connection element (140) presents a surface finishing with greater rugosity.

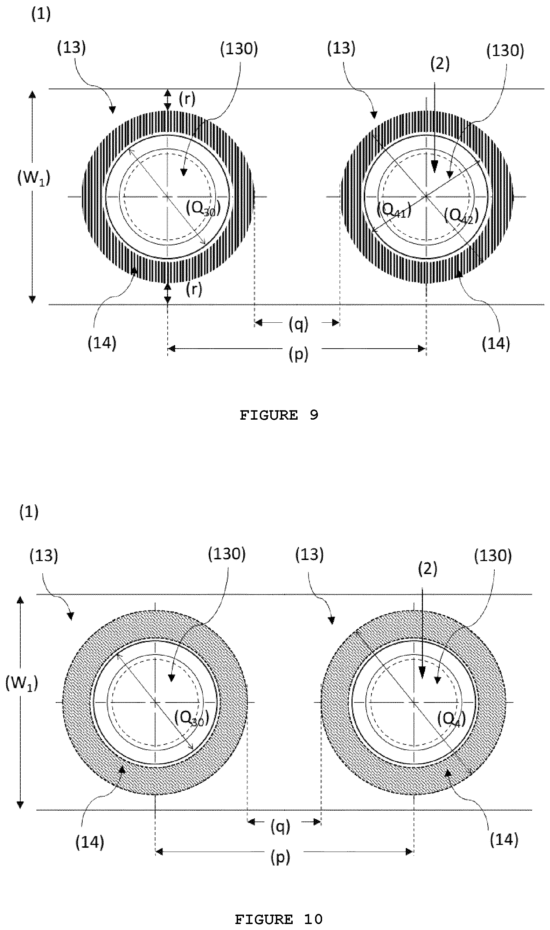

**Figure 9** represents an embodiment where the connection region (14) presents a surface finishing that is different from the surface finishing of the other portion of the supply support (1).

The connection region (14) presents a surface finishing that is rougher than other portions of the supply support (1), so that improve the ease of apprehension and retention by other means, including by the traction (101) and extraction devices (102).

During the process of production of the supply support (1), the rugosity of the connection regions (14) can be provided by impression or pressing of the support sheets (11, 12) in a common process step or directly after a step of connection thereof by means of connection regions (14).

Alternatively, the rugosity can be associated with a connection element (14) and be transmitted to the surface of the support sheets (11, 12) during a step of connection between these.

According to an advantageous aspect, the connection regions (14) present a characteristic connection dimension (Q₄) that matches with a corresponding region of the traction device (101), around a cavity configured with a shape of part of a hemisphere of the collection confinements (130), so that provides better engagement of the supply support (1) with the traction device (101).

The supply supports (1) can present connection regions (14) with surface characteristics that are different from other regions of the supply support (1), preferentially with physical characteristics adapted so that can be apprehended by automatic data apprehension means.

**Figure 10** represents an embodiment where the connection region (14) presents at least one optical property different from other portions of the supply support (1).

It is preferred when the connection regions (14) present at least one of: a different surface rugosity and a different optical property from other regions of the supply support (1), preferentially including different from the regions of collection confinements (130) and between the connection regions (14) of successive collection confinements (130), and preferentially at least approximately equal to the ones of at least parts of the free lateral edges (r).

It is preferred when the connection regions (14) present at least one of: a colour, a geometric pattern and a code adapted so that can be apprehended by automatic data apprehension means.

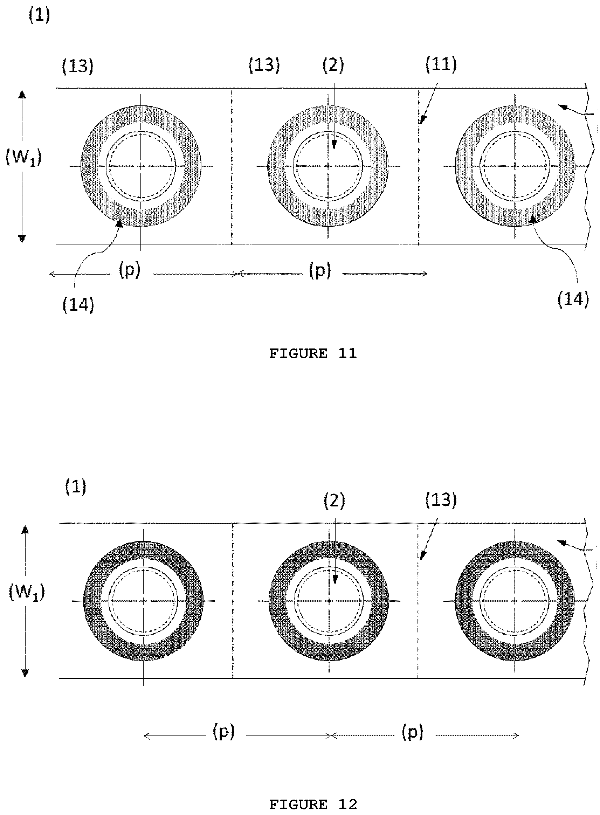

**Figures 11** and **12** represent embodiments of two supply supports (1) that present connection regions (14) with at least one of different colour, different light reflexion or different brightness.

The supply support (1) according to the present invention is configured so that provides a more effective storage thereof in a respective cartridge (3) and a more efficient use in a beverage preparation machine (100).

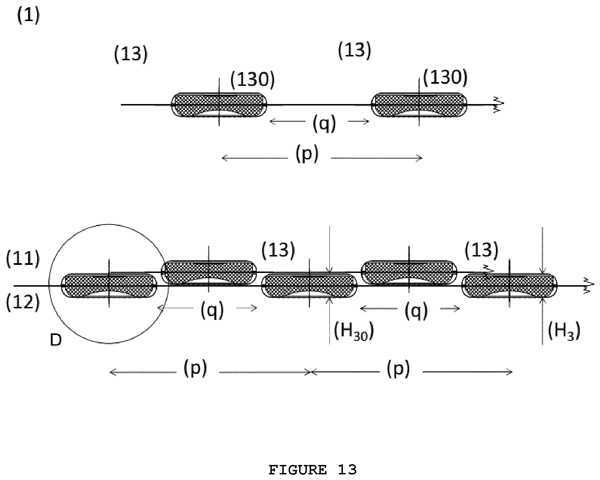

As represented in **Figure 13****,** the supply support (1) presents successive collection confinements (130) disposed at a free distance (q) to each other bigger than the characteristic collection dimension (Q₃₀) of the collection confinements (130), so that the supply support (1) can be folded in zigzag in such a disposition where collection confinements (130) from a first partial extension of the supply support (1) can be disposed in the spaces between collection confinements (130) of a second partial extension of support (1) disposed directly underneath the first one.

As the reader shall promptly understand, this feature enables collecting the supply support (1) in a more compact manner, with bigger rate of use of the collection volume, inside of a respective collection package.

It is particularly advantageous when the supply support (1) presents collection confinements (130) disposed according to a ratio between the step extension (p) and the free distance (q) comprised between 2.01:1 and 2.20:1, preferentially between 2.05:1 and 2.15:1, so that in a zigzag disposition of the supply support (1), a first set of collection confinements (130) can be retained between a second set of collection confinements (130) directly upstream of the first set.

It is further preferred when the supply support (1) presents connection regions (14) that extend on a fraction of the extension of the free distance (q) comprised between 0,20 and 0,50, preferentially between 0,25 and 0,40, so that the connection regions (14) provide a reinforcement in a part of the extension of the supply support (1) between successive collection confinements (130), and thereby promote a flexion of the supply support (1) in these regions between collection confinements (130) devoid of connection region (14).

It is further preferred when the supply support (1) presents at least one of:
- a ratio between characteristic collection dimension (Q₃₀) and height (H₃₀) of the collection confinements (130) comprised between 3.0:1 and 6.0:1, preferentially between 3.5:1 and 5.0:1, whereby the characteristic collection dimension (Q₃₀) is comprised between 30 and 45 mm, preferentially between 35 and 40 mm,
- a ratio between characteristic connection dimension (Q₄) and projection on the connection plane (Y) of the extension of the collection confinements (130) between lateral walls (15) thereof comprised between 1.5:1 and 2.5.:1, preferentially between 1.7:1 and 2.2:1, whereby the collection walls (15) present a curvature with a radius comprised between 3 and 7 mm, preferentially between 4 and 6 mm along at least most part of their extension.

Together with the characteristic dimensional relations of step extension (p) and free distance (q), these aspects provide a format and volume of collection confinements (130) that, as a function of weight and volume requirements of the individual portions (2), render easier to drive the supply support (1) along a longitudinal direction, in particular pulling thereof out of the cartridge casing (31) by a traction device (101).

In terms of efficiency of use of the supply support (1) and of operation of a beverage preparation machine (100), a balance has been established between a bigger number of individual portions (2) and the viability of collecting a length (L1) inside a cartridge casing (31) of handy dimensions, as well as operating a total weight of the supply support (1) above certain values.

In this sense it has been demonstrated as particularly advantageous when the supply support (1) presents a length (L₁) comprised between 50 and 120 times the step extension (p), preferentially between 60 and 100 times. This dimension provides better rates of use of the machine (100), reducing the number of required replacements of the cartridge (3).

Moreover, it is particularly advantageous when the support sheets (11, 12) and connection regions (14) are provided so that presents a resistance to rupture by traction along a longitudinal direction of at least 6 kg, preferentially at least 3 kg.

The supply support (1) is configured so that can be collected inside a cartridge casing (31), folded in at least 10, preferentially at least 11 successive segments of supply support (1) of an at least approximately equal extension, in a zigzag stack disposition that extends along a generally upwards direction of a cartridge casing (31).

The physical characteristics of the supply support (11, 12) are also relevant in the context of the present invention, in particular the characteristics associated with the structural behaviour. In this context, it has been demonstrated as advantageous when the support sheets (11, 12) are provided in a material or alloy of materials presenting at least one of the following parameters:
- a sealing resistance of at least 3,5 N/ 15 mm;
- an elongation to rupture in the direction of the machine (MD) between 30 and 75%;
- an elongation under traction of at most 5 %;
- resistance to tension in the direction of the machine (MD) between 85 an 135 N/15 mm;
- a total thickness of two support sheets (11, 12) comprised between 0,02 and 0,15 mm, preferentially between 0,05 and 0,09 mm;
- a specific weight, without considering the weight of the individual portions (2), comprised between 20 g/m² and 200 g/m2, preferentially between 50 g/m² and 150 g/m².

Moreover, the support sheets (11, 12) are advantageously provided in a material or alloy of materials presenting at least one of the following parameters:
- an oxygen transmission equal or smaller than 0,1 cm³/m2*d*bar;
- a water vapour transmission equal or smaller than 0,1 g/m²*d.

## Claims

1. Supply support (1) presenting a plurality of individual portions (2) of edible substance for preparing beverages,
the supply support (1) including support sheets (11, 12) juxtaposed and united to each other along a connection plane (Y),
the support sheets (11, 12) being conformed with cavities and united to each other so as to jointly provide collection confinements (130) that confine a collection volume in gas-sealed manner,
the collection confinements (130) being disposed according to a step (p) extension, so that results a free (q) distance between them along a longitudinal direction of the supply support (1), free lateral margins (r) in the lateral edges of the supply support (1) with a width (W₁), and presenting a total height (H₃₀) that extends on both sides of the connection plane (Y),
the individual portions (2) presenting a characteristic transversal portion dimension (Q₂), and the collection confinements (130) presenting a characteristic transversal collection dimension (Q₃₀) in the connection plane (Y),
**characterized**
**in that** the support sheets (11, 12) are united by connection regions (14) that provide a continuous material connection surface that extends in the connection plane (Y) from the perimeter region of the collection confinements (130) in a continuous surface extension smaller than the surface extension of the support sheets (11, 12) occupied by the collection confinements (13).

2. Supply support according to claim 1, **characterized**
**in that** the connection regions (14) present a non-linear annular shape and are disposed in symmetric and centred manner relative to the collection confinements (130), with a characteristic connection dimension (Q₄) smaller than the width (W₁) of the supply support (1),
and/or
**in that** the connection regions (14) extend from the perimeter region of the lateral walls (15) of collection confinements (130) of curved shape when seen in side cut view, preferentially in an extension smaller than the extension of the free lateral edges (r) of the supply support (1).

3. Supply support according to claims 1 or 2, **characterized in that** the connection regions (14) present a thickness (T₄) that is bigger, preferentially at least 5% bigger, particularly preferentially at least 10% bigger than the thickness (T₁) of the juxtaposed support sheets (11, 12).

4. Supply support according to any of claims 1 to 3, **characterized in that** the support sheets (11, 12) are united to each other by means of connection regions (14) configured so that provide continuous material connection between the support sheets (11, 12), including by means of fusion of materials, such as for example thermal welding, or by means of adhesion between materials, for example by means of adhesive substances, whereby it is preferred when the connection regions (14) are configured so that provide a resistance to rupture under a pressure of at least 20 bar, preferentially at least 25 bar inside of the collection confinements (130).

5. Supply support according to any of claims 1 to 4, **characterized in that** the connection regions (14) are configured so that present a bigger resistance to flexion and/or rigidity, preferentially at least 10% bigger, more preferentially at least 15% bigger, than other regions of the support sheets (11, 12) around them externally with relation to a respective central axis, so that provide regions of preferential flexion of the supply support (1) on each side of a collection confinement (130) and between successive connection regions (14) thereof, along the longitudinal direction of the supply support (1).

6. Supply support according to any of claims 1 to 5, **characterized in that** the connection regions (14) are configured so that present a bigger resistance to at least one of: to rupture, to perforation and to cut, that other regions of the supply support (1), preferentially including in the regions of the collection confinements (130) and between connection regions (14) of successive collection confinements (130).

7. Supply support according to any of claims 1 to 6, **characterized in that** the connection regions (14) present at least one of: a surface rugosity and an optical property that is different from other regions of the supply support (1), preferentially including from the regions of the collection confinements (130) and between connection regions (14) of successive collection confinements (130), and preferentially at least approximately equal to the one of at least parts of the free lateral edges (r),
and/or
**in that** the connection regions (14) present at least one of: a colour, a geometric pattern and a code configured so that can be apprehended by automatic data apprehension means.

8. Supply support according to any of claims 1 to 7, **characterized in that** the connection regions (14) present at least one of:
- a ratio between characteristic connection dimension (Q₄) and characteristic collection dimension (Q₃₀) comprised between 1.10:1 and 1.50:1, preferentially between 1.20:1 and 1.40:1;
- a ratio between extension of connection surface (Q₄₂-Q₄₁) and curvature radius of lateral wall (15) of collection confinement (130) comprised between 1.30:1 and 2.50:1, preferentially between 1.50:1 and 2.00:1;
- a ratio between area of surface connection and collection volume confined by the collection confinements (130) comprised between 1.50:1 and 2.50:1 cm⁻¹, preferentially between 1.60:1 and 2.00:1 cm⁻¹.

9. Supply support according to any of claims 1 to 8, **characterized in that** the support sheets (11, 12) are united to each other by connection regions (14) that include a connection element (140) disposed between the support sheets (11, 12) and presenting at least one of: geometrical shape and dimension at least approximately equal to the geometrical shape and dimension of the connection regions (14),
and/or
**in that** the support sheets (11, 12) are united to each other by means of connection regions (14) that include a connection element (140) that presents at least one of: material connection properties of the material of the support sheets (11, 12) bigger than those of the material of the support sheets (11, 12), and resistance to flexion bigger than that of the material of the support sheets (11, 12).

10. Supply support according to any of claims 1 to 9, **characterized**
**in that** the supply support (1) presents collection confinements (130) at a free (q) distance between each other that is bigger than the characteristic collection dimension (Q₃₀) of the collection confinements (130), so that the supply support (1) can be folded in a zigzag disposition whereby collection confinements (130) of a first partial extension of the supply support (1) can be disposed in the free spaces between collection confinements (130) of a second partial extension of supply support (1) disposed directly underneath.

11. Supply support according to any of previous claims, **characterized**
**in that** the supply support (1) presents collection confinements (130) disposed according to a ratio between the step (p) distance and the free (q) distance comprised between 2.01:1 and 2.20:1, preferentially between 2.05:1 and 2.15:1, so that in a zigzag disposition of the support (1), a first set of collection confinements (130) can be retained in-between a second set of collection confinements (130) directly upstream of the first set.

12. Supply support according to any of previous claims, **characterized**
**in that** the supply support (1) presents connection regions (14) that extend along a fraction of the extension of free (q) distance comprised between 0,20 and 0,50, preferentially between 0,25 and 0,40, so that the connection regions (14) provide a reinforcement between successive collection confinements (130).

13. Supply support according to any of previous claims, **characterized**
**in that** the supply support (1) presents a length (L₁) comprised between 50 and 120 times the step (p) extension, preferentially between 60 and 100 times the step (p) extension,
and/or
**in that** the supply support (1) comprises support sheets (11, 12) provided in a material that presents a resistance to rupture by traction along the longitudinal direction of at least 2 kg, preferentially of at least 4 kg, particularly preferentially of at least 6 kg.

14. Process for production of a supply support (1) for collection of a plurality of individual portions (2) for preparing beverages, in particular a supply support (1) according to any of claims 1 to 13, **characterized**
**in that** said process comprises the steps:
- conforming the support sheets (11, 12) so as to configure cavities of collection confinements (130) that present at least approximately equal shape and dimensions as well as at least approximately equal relative disposition in both of the support sheets (11, 12);
- supplying previously compacted individual portions (2) to respective cavities of collection confinement (130) of a support sheet (12);
- application of a first support sheet (11) upon the second support sheet(12) so as to confine the individual portions (2) in respective collection portions (13);
- optionally, supplying a connection element (140) of planar format and disposed concentric relative to a central axis of the collection confinements (130);
- uniting the support sheets (11, 12) to each other by means of material connection in continuous surface of non-linear format in previously determined connection regions (14);
- cutting of extensions of support sheets (11, 12) corresponding to a previously determined length (L₁) of supply support (1) and/or number of collection portions (13);
- sealing the free edges at the tops of a length (L₁) of supply support (1) by means of material connection of transversal portions along the entire width a (W₁) and a longitudinal extension smaller than the extension of a support portion (13).

15. Process according to claim 14, **characterized in that** the following steps are operated with the following respective parameters:
- the conformation of the support sheets (11, 12) includes the operation of punching dies with a punching force comprised between 1500 and 2500 N, so as to generate a cavity with a depth comprised between 4 and 8 mm,
- the sealing of the support sheets (11, 12) includes the operation of a sealing temperature comprised between 160 and 220 °C during a period comprised between 50 milliseconds and 1 second.

16. Process according to claims 15 or 16, **characterized in that** further includes at least one of:
- a step of providing a pattern on at least one of the outward-oriented surfaces of the connection regions (14);
- a step of providing at least one of: a colour, a pattern and set of symbols on at least one of the outward-oriented surfaces of the connection regions (14);
- a step of printing with a food grade ink upon at least of the outward-oriented surfaces of at least one of the support sheets (11, 12), preferentially only upon at least one of: collection portion (13), connection region (14) and remaining supply support (1).
